# EUROPÄISCHE PATENTSCHRIFT

(11) **EP 2 269 865 B1**
(45) Veröffentlichungstag und Bekanntmachung des Hinweises auf die Patenterteilung: **03.10.2012**
(21) Anmeldenummer: 10006746.1
(22) Anmeldetag: 30.06.2010
(51) Int. Cl.: B60N 2/42, B60N 2/427, B60N 2/68

(54) **Fahrzeugsitz**
Vehicle seat
Siège de véhicule

(30) Priorität: 14.08.2009 DE 102009037314; 01.07.2009 DE 102009031470; 04.08.2009 DE 102009035991
(43) Veröffentlichungstag der Anmeldung: 05.01.2011
(73) Patentinhaber: AKsys GmbH i.I., 67547 Worms (DE)
(72) Erfinder: Dietz, Horst, 67727 Lohnsfeld (DE)
(74) Vertreter: Müller Schupfner & Partner

(56) Entgegenhaltungen:
- DE-A1- 2 303 289
- DE-A1- 10 321 277
- DE-A1- 10 321 289
- DE-A1-102008 011 246
- FR-A1- 2 919 238
- US-A1- 2004 256 878

## Beschreibung

Die Erfindung betrifft einen Fahrzeugsitz mit einer Rückenlehne und/oder einem Sitzteil, die/das schalenförmig oder hohl ausgebildet ist/sind (siehe z.B. die DE 23 03 289 A1, dem Oberbegriff entsprechend), sowie ein Verfahren zum Herstellen eines solchen Fahrzeugsitzes.

### Stand der Technik

Fahrzeugsitze sind in vielfältiger Form und Ausführen bekannt und auf dem Markt. In der Regel bestehen sie aus einem Metall oder Blechrahmen, der von einem Polster umfangen ist. Die Herstellung derartiger Sitzteile, nämlich Rückenlehne und/oder Sitzteile ist aufwendig und teuer, ferner sind derartige Fahrzeugsitze relativ schwer.

Im Zuge der Gewichtsreduktion ist bereits in der Vergangenheit auch dazu übergegangen worden, Fahrzeugsitze, insbesondere die Rückenlehne von Fahrzeugsitzen aus Kunststoff herzustellen. Dadurch findet eine Gewichtsreduktion statt. Ferner hat eine Kunststoffschale ein besseres Dehnmodul als Blech. Die geht beispielsweise aus der DE 20 2007 000 484 U1 hervor.

Des Weiteren ist aus der DE 103 21 277 A1 eine Rückenlehne aus zumindest einem Polster bekannt, das an einem Rahmen aus einem Kunststoff angebracht ist, der mit zumindest einem einteilig mit dem Rahmen ausgeführten Träger versteift ist. Der Rahmen und der zumindest eine Träger sind mit einem Kunststoffschaum umschäumt, der eine Lehnenschale bildet.

Aus der DE 103 21 289A1 ist eine Rückenlehne aus einer Tragstruktur aus zwei Kunststoffschalen bekannt, die zumindest einen Hohlraum umschliessen, in dem sich zumindest ein formstabiles Schaumteil befindet. Das Schaumteil verhindert bei hohen Beanspruchungen ein Beulen, Knicken oder Brechen der Kunststoffschalen, da es stützend wirkt. Dazu füllt das zumindest eine Schaumteil den zumindest einen Hohlraum möglichst völlig aus. Dadurch können die Kunststoffschalen besonders dünnwandig ausgeführt werden.

### Aufgabe

Aufgabe der vorliegenden Erfindung ist es, den Aufbau eines Fahrzeugssitzes nochmals zu verbessern und zu einer weiteren Gewichtsreduktion beizutragen.

### Lösung der Aufgabe

Zur Lösung der Aufgabe führt die Merkmalskombination des unabhängigen Anspruchs 1, wobei weitere Merkmale der Erfindung in den abhängigen Vorrichtungsansprüchen bzw. in den Verfahrensansprüchen angegeben sind.

Dass die Rückenlehne und/oder das Sitzteil einen Aufnahmeraum für ein flexibles Werkstoffteil aufweist/en bedeutet, dass Rückenlehne und/oder Sitzteil nicht mehr nur aus einer Kunststoffplatte oder einem hohlen Kunststoffkörper besteht/en, sondern ein dämpfendes Material in Rückenlehne und/oder Sitzteil integriert ist. Diese Einlage dient dazu, vor allem im Crashfall kinetische Energie abzubauen. Erfindungsgemäß wird hierfür ein EPP-Schaum verwendet, der den letztgenannten Vorteil des Abbaus der kinetischen Energie besonders hervorragend erfüllt. Die Kunststoffschale bzw. der Hohlkörper selbst besteht aus einem glasfaserverstärkten Thermoplast, wobei der flexible Werkstoffteil aus röhrchen- bzw. maccaroniförmigen Elementen gebildet ist. Diese sind im Stand der Technik bekannt. Sie werden beispielsweise als Hohlkammergranulat in den Aufnahmeraum der Kunststoffschale oder den Hohlkörper mit heißem Dampf eingeblasen, wodurch sie zusammenbacken, aber röhrchenförmige Gänge ausbilden. Nach dem Einbringen des flexiblen Werkstoffteils in den Aufnahmeraum, wird dieser im Falle einer Kunststoffschale bevorzugt mit einer Rückenplatte verschlossen. Beispielsweise wird die Rückenplatte auf die Kunststoffschale aufgeschweißt.

Noch vor dem Einbringen des flexiblen Werkstoffteils ist im Übrigen vorgesehen, seitlich in den Aufnahmeraum entsprechende Gewindeplatten zum Festlegen von Beschlagteilen an Rückenlehne bzw. Sitzteil anzuordnen. Diese können dort verklebt oder vernietet werden.

In einem bevorzugten Ausführungsbeispiel wird nun die gesamte Rückenlehne und/oder das Sitzteil oder falls gewünscht, nur ein Teil von diesem mit einem Stoffbezug kaschiert.

Ein besonderer Vorteil der vorliegenden Erfindung liegt darin, dass in die Rückenlehne bereits eine Kopfstütze integriert sein kann. Beispielsweise könnte diese Kopfstütze einstückig der Kunststoffschale zugeordnet oder aus dem Hohlkörper herausgeformt sein. Gerade dieser Bereich bietet sich auch für einen Aufnahmeraum bzw. einen Teil eines Aufnahmeraums für ein flexibles Werkstoffteil an, wobei dieses so ausgelegt werden sollte, dass der Aufprall des Kopfes möglich sanft abgefangen wird.

### Figurenbeschreibung

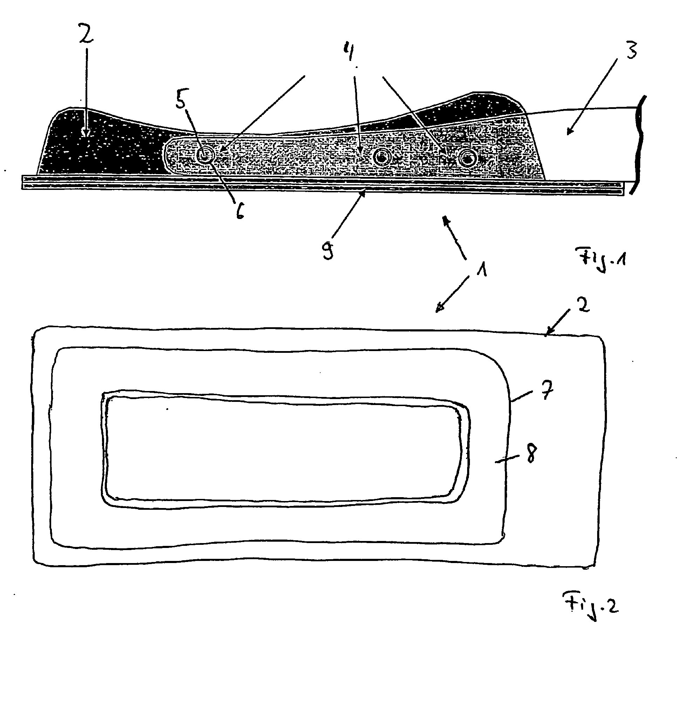

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: eine Seitenansicht einer erfindungsgemäßen Rückenlehne;
- Figur 2: eine geöffnete Rückansicht der Rücklehne gemäss Figur 1.

Eine erfindungsgemäße Rückenlehne 1 weist eine Kunststoffschale 2 auf, an die beidseits ein Beschlagteil 3 angelegt ist. Dieses Beschlagteil 3 ist mit der Kunststoffschale 2 verbunden, wobei in der Kunststoffschale 2 Gewindeplatten 4 vorgesehen sind, deren Gewindebohrungen 5 mit entsprechenden Öffnungen 6 in dem Beschlagteil 3 kongruieren. Durch die Öffnungen 6 können entsprechende Befestigungselemente, wie beispielsweise Schraubenbolzen, in die Gewindebohrungen 5 eingeschraubt werden.

Erfindungsgemäß weist die Rückenlehne 1 bzw. die Kunststoffschale 2 einen nach hinten gerichteten Aufnahmeraum 7 auf, in dem ein flexibles Werkstoffteil 8 angeordnet ist. In Gebrauchslage werden dieser Aufnahmeraum 7 und das flexible Werkstoffteil 8 durch eine Rückenplatte 9 abgedeckt, die ebenfalls aus Kunststoff bestehen kann und mit der Kunststoffschale 2 verschweißt ist.

Die Herstellung einer derartigen Rückenlehne geschieht wie folgt:
Durch Spritzgiessen, Giessen oder im Tiefziehverfahren wird die Kunststoffschale 2 mit dem Aufnahmeraum 7 hergestellt. Erfindungsgemäß wird ein Thermoplast verwendet und mit Glasfaser verstärkt.

Unabhängig davon wird das flexible Werkstoffteil 8 aus einem EPP-Schaum in der Form des Aufnahmeraums 7 hergestellt und in diesen eingelegt. Danach wird gegebenenfalls der Aufnahmeraum 7 durch die Rückenplatte 9 verschlossen und die jetzt hergestellte Rückenlehne 1 insgesamt mit einem Stoff kaschiert.

Eine andere, besonders hervorzuhebende Herstellungsweise ist die, dass nach dem Herstellen der Kunststoffschale 2, beispielsweise im Tiefziehverfahren, diese und insbesondere der Aufnahmeraum 7 durch eine Rückenplatte verschlossen wird. Dabei befinden sich aber in der Rückenplatte 9 oder auch in der Kunststoffschale 2 Öffnungen, in die ein als Maccaroni-Schaum bekanntes Hohlkammergranulat eingeblasen wird. Dies geschieht mit heißem Dampf, sodass die einzelnen Maccaroni-Granulatbestandteile, die röhrchenförmig ausgebildet sind, miteinander verkleben. Ein derartiges flexibles Werkstoffteil 8 ist insbesondere in der Lage, kinetische Energie im Crashfall hervorragend abzubauen, gleichzeitig wir aber auch Körperfeuchtigkeit durch den Maccaroni-Schaum von der Oberfläche des Sitzes abtransportiert.

### Bezugszeichenliste

| | | | | | |
|---|---|---|---|---|---|
| 1 | Rückenlehne | 34 | | 67 | |
| 2 | Kunststoffschale | 35 | | 68 | |
| 3 | Beschlagteil | 36 | | 69 | |
| 4 | Gewindeplatte | 37 | | 70 | |
| 5, 6 | Öffnungen/Bohrungen | 38 | | 71 | |
| 7 | Aufnahmeraum | 39 | | 72 | |
| 8 | flexibles Werkstoffteil | 40 | | 73 | |
| 9 | Rückenplatte | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Fahrzeugsitz mit einer Rückenlehne (1) und/oder einem Sitzteil, die/das schalenförmig oder hohl ausgebildet ist/sind, wobei die Rückenlehne (1) und/oder das Sitzteil eine Kuntstoffschale (2), einen Aufnahmeraum (7) für ein flexibles Werkstoffteil (8), ein im Aufnahmeraum (7) angeordnetes, flexibles Werkstoffteil (8) und einen Hohlkörper aufweist/en, in dem sich der Aufnahmeraum (7) befindet, **dadurch gekennzeichnet, dass** die Kunststoffschale (2) bzw. der Hohlkörper aus einem glasfaserverstärkten Thermoplast besteht, wobei das flexible Werkstoffteil aus einem expandierten Polypropylen (EPP) - Schaum hergestellt ist, wobei das flexible Werkstoffteil (8) aus röhrchen- bzw. maccaroniförmigen Elementen gebildet ist.

2. Fahrzeugsitz nach Anspruch 1, **dadurch gekennzeichnet, dass** die Kunststoffschale (2) den Aufnahmeraum (7) ausbildet.

3. Fahrzeugsitz nach Anspruch 1 oder 2, **dadurch gekennzeichnet, dass** der Aufnahmeraum (7) durch eine Rückenplatte (9) verschlossen ist.

4. Fahrzeugsitz nach einem der Ansprüche 1 bis 3, **dadurch gekennzeichnet, dass** die Kunststoffschale (2) direkt mit einem Stoffbezug kaschiert ist/sind.

5. Fahrzeugsitz nach einem der Ansprüche 1 bis 4, **dadurch gekennzeichnet, dass** in die Rückenlehne (1) eine Kopfstütze integriert ist.

6. Fahrzeugsitz nach Anspruch 5, **dadurch gekennzeichnet, dass** der Aufnahmeraum (7) zumindest teilweise im Bereich der Kopfstütze vorgesehen ist.

7. Verfahren zum Herstellen eines Fahrzeugssitzes nach einem der Ansprüche 1 bis 6, **dadurch gekennzeichnet, dass** in den Aufnahmeraum (7) bzw. den Hohlkörper ein Schaum aus Hohlkammergranulat mit heissem Dampf eingeblasen wird.

8. Verfahren zur Herstellung eines Fahrzeugssitzes nach einem der Ansprüche 1 bis 6, **dadurch gekennzeichnet, dass** in die Rückenlehne und/oder Sitzschale Gewindeplatten (4) zum Festlegen von Beschlagteilen eingebracht, z. B. verklebt, eingespritzt oder vernietet, werden.

## Claims

1. Vehicle seat having a backrest (1) and/or a seat part which is/are designed shell-like or hollow, wherein the backrest (1) and/or the seat part comprise(s) a plastic shell (2), a receiving space (7) for a flexible material piece (8), a flexible material piece (8) which is arranged in the receiving space (7), and a hollow body in which the receiving space (7) is located,
**characterized in that** the plastic shell (2) or the hollow body, respectively, are made from a glass fibre reinforced thermoplastic material, wherein the flexible material piece is made from an expanded polypropylene (EPP) foam, wherein the flexible material piece (8) is formed by elements shaped like small tubes or macaroni.

2. Vehicle seat according to claim 1, **characterized in that** the plastic shell (2) forms the receiving space (7).

3. Vehicle seat according to claim 1 or 2, **characterized in that** the receiving space (7) is closed by means of a backplate (9).

4. Vehicle seat according to any one of claims 1 to 3, **characterized in that** the plastic shell (2) is directly clad by a fabric cover.

5. Vehicle seat according to any one of claims 1 to 4, **characterized in that** a headrest is integrated into the backrest (1).

6. Vehicle seat according to claim 5, **characterized in that** the receiving space (7) is provided at least partially in the area of the headrest.

7. Method of manufacturing a vehicle seat according to any one of claims 1 to 6, **characterized in that** a foam made from hollow chamber granules is blown into the receiving space (7) or the hollow room, respectively, using hot vapour.

8. Method of manufacturing a vehicle seat according to any one of claims 1 to 6, **characterized in that** into the backrest and/or seat shell there are introduced, e.g. by adhesive bonding, injecting or riveting, threaded plates (4) for fixing fittings.

## Revendications

1. Siège de véhicule comprenant un dossier (1) et/ou une partie d'assise, lequel/laquelle est/sont réalisé(e)s sous forme de coque ou sous forme creuse, le dossier (1) et/ou la partie d'assise comprenant une coque en matière plastique (2), une chambre de réception (7) pour une partie en matériau flexible (8), une partie en matériau flexible (8) agencée dans la chambre de réception (7), et un corps creux dans lequel se trouve la chambre de réception (7), **caractérisé en ce que** la coque en matière plastique (2) ou respectivement le corps creux est en une matière thermoplastique renforcée par des fibres de verre, la partie en matériau flexible est réalisée en une mousse de polypropylène expansé (EPP), et la partie en matériau flexible (8) est formée par des éléments en forme de petits tubes ou respectivement en forme de macaronis.

2. Siège de véhicule selon la revendication 1, **caractérisé en ce que** la coque en matière plastique (2) constitue la chambre de réception (7).

3. Siège de véhicule selon la revendication 1 ou 2, **caractérisé en ce que** la chambre de réception (7) est refermée par une plaque dorsale (9).

4. Siège de véhicule selon l'une des revendications 1 à 3, **caractérisé en ce que** la coque en matière plastique (2) est doublée directement avec un revêtement en tissu.

5. Siège de véhicule selon l'une des revendications 1 à 4, **caractérisé en ce qu'**un appui-tête est intégré dans le dossier (1).

6. Siège de véhicule selon la revendication 5, **caractérisé en ce que** la chambre de réception (7) est prévue au moins partiellement dans la région de l'appui-tête.

7. Procédé pour réaliser un siège de véhicule selon l'une des revendications 1 à 6, **caractérisé en ce que** l'on souffle dans la chambre de réception (7) ou dans le corps creux une mousse en granulés creux avec de la vapeur à haute température.

8. Procédé pour réaliser un siège de véhicule selon l'une des revendications 1 à 6, **caractérisé en ce que** des plaques de vissage (4) sont intégrées, par exemple collées, injectées ou rivetées, dans le dossier et/ou dans la coque de siège, pour immobiliser des pièces de ferrures.
